(19) Europäisches Patentamt / European Patent Office / Office européen des brevets

(11) **EP 4 394 658 A1**

(12) **DEMANDE DE BREVET EUROPEEN**

(43) Date de publication:
**03.07.2024 Bulletin 2024/27**

(21) Numéro de dépôt: 23220246.5

(22) Date de dépôt: **27.12.2023**

(51) Classification Internationale des Brevets (IPC):
**G06N 3/0464** (2023.01)   **G06N 3/048** (2023.01)
**G06N 3/0495** (2023.01)   **G06N 3/084** (2023.01)
**G06N 3/09** (2023.01)   **G06N 3/0985** (2023.01)
**G06N 3/126** (2023.01)

(52) Classification Coopérative des Brevets (CPC):
**G06N 3/084; G06N 3/0464; G06N 3/048;
G06N 3/0495; G06N 3/09; G06N 3/0985;
G06N 3/126**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **27.12.2022 FR 2214553**

(71) Demandeur: **Commissariat à l'énergie atomique
et aux énergies alternatives
75015 Paris (FR)**

(72) Inventeurs:
• **BRIAND, David
  91191 GIF SUR YVETTE CEDEX (FR)**
• **METZ, Clément
  91191 GIF SUR YVETTE CEDEX (FR)**

(74) Mandataire: **Lavoix
2, place d'Estienne d'Orves
75441 Paris Cedex 09 (FR)**

(54) **PROCÉDÉ AMÉLIORÉ D APPRENTISSAGE SENSIBLE À LA QUANTIFICATION POUR UN RÉSEAU DE NEURONES**

(57) Procédé d'apprentissage (700) pour un réseau de neurones, le procédé d'apprentissage s'appuyant sur une technique sensible à la quantification, la technique sensible à la quantification mettant en oeuvre au moins une fonction de quantification, la fonction de quantification permettant de quantifier au moins une variable d'une couche de neurones, la fonction de quantification se caractérisant par une précision de quantification ($p^{(k)}$), la précision de quantification étant définie comme le nombre de paliers de la fonction de quantification, le procédé d'apprentissage étant caractérisé en ce que la précision de quantification de la fonction de quantification est modifiée (770) progressivement au cours des époques du procédé d'apprentissage, pour passer d'une précision de quantification initiale ($2^{b+2}$) à une précision de quantification cible ($2^b$), les précisions de quantification initiale et cible étant prédéfinies, la précision de quantification initiale étant strictement supérieure à la précision de quantification cible.

FIG.5

**Description**

La présente invention concerne le domaine des réseaux de neurones, et, plus particulièrement, celui des procédés de quantification des réseaux de neurones.

Un réseau de neurones est un type particulier de modèle d'intelligence artificielle, dont le but est d'effectuer des tâches, telles que la reconnaissance d'images, la traduction de texte, la génération d'images...

Un réseau de neurones est un modèle prenant en entrée une instance sur laquelle effectuer la tâche requise, et délivre en sortie une prédiction sur cette instance.

Un réseau de neurones se décompose en une ou plusieurs couches de neurones.

Une couche de neurones comprend classiquement une couche d'opération suivie d'une couche d'activation.

La couche d'opération peut être par exemple une couche de convolution ou une couche « totalement connectée » (« fully connected » en anglais). Elle réalise une combinaison linéaire de valeurs d'entrée.

Une couche d'activation réalise une fonction généralement non linéaire prenant en entrée la valeur de résultat de la couche d'opérations et délivrant en sortie une ou plusieurs valeurs dites valeurs d'activation.

Les valeurs d'activation, qui constituent les valeurs de sortie d'une couche de neurones, constituent également les valeurs d'entrée de la couche de neurones suivante.

D'autres couches peuvent être présentes dans une couche de neurones comme une couche de normalisation (« batch normalization » en anglais), ou de moyennage (« pooling » en anglais).

L'organisation de ces différentes couches dans une couche de neurones et des différentes couches de neurones entre elles définit l'architecture du réseau de neurones. De très nombreuses architectures de réseaux de neurones sont connues.

Certaines des opérations élémentaires effectuées par une couche sont paramétriques, au sens où elles dépendent d'un ou plusieurs paramètres, qui constituent les paramètres du réseau de neurones et qui sont les paramètres à apprendre. Par exemple, l'opération élémentaire réalisée par une couche de convolution utilise des paramètres de poids.

Un réseau de neurones doit donc être entraîné de manière à apprendre les valeurs optimales de ces différents paramètres afin de réaliser efficacement la tâche qui lui a été assignée.

L'entrainement s'effectue généralement avec les données d'une base d'entrainement. Celle-ci peut par exemple comporter des instances labellisées. Une instance labellisée est une instance qui est associée avec une prédiction attendue. La comparaison entre la prédiction calculée par le réseau de neurones sur une instance et la prédiction attendue associée à cette instance permet, par l'intermédiaire de la fonction de coût (« Loss » en anglais), d'ajuster les valeurs des paramètres du réseau de neurones.

L'entraînement consiste généralement à réaliser plusieurs époques successives comprenant chacune une phase d'inférence (« Forward pass » en anglais) et une phase de rétropropagation (« backward pass » en anglais).

Le résultat de l'entrainement est donc un réseau de neurones entrainé (aussi dénommé « modèle entrainé » ou « modèle d'inférence »), c'est-à-dire dont les différents paramètres sont gelés à leurs valeurs optimales. Le réseau de neurones entrainé peut ensuite être utilisé pour réaliser la tâche assignée sur de nouvelles instances de données d'entrée.

Cependant, par exemple pour des applications embarquées, le réseau de neurones entrainé doit pouvoir fonctionner sur un circuit de calcul dont les ressources mémoires et/ou calculatoires sont réduites, ou tout au moins comptées.

Il y a donc un besoin pour des réseaux de neurones entrainés qui ont un usage restreint des ressources du circuit de calcul sur lequel ils sont implémentés.

Dans ce but, la quantification d'un réseau de neurones est le problème consistant à réduire le nombre de bits sur lequel sont codées les variables du réseau de neurones, que ce soit les paramètres du modèle entrainé, que les valeurs qui circulent à travers le modèle entrainé (notamment les valeurs d'activation).

La quantification permet par exemple de passer de variables codées en précision flottante (c'est-à-dire codées sur 32 bits), à des variables codées en précision réduite (c'est-à-dire codées sur 8, 4, 2 voire 1 bit(s)).

Puisqu'un réseau de neurones comporte plusieurs dizaines de milliers de variables, réduire le nombre de bits sur lequel chaque paramètre ou chaque valeur d'activation est codé permet de réduire l'espace mémoire nécessaire pour stocker le réseau de neurones entrainé, ainsi que les données de calcul intermédiaires (comme les valeurs d'activations) lors de l'exécution du réseau de neurones entrainé. En outre, cela permet de réduire l'usage du processeur, qui utilisera son module d'arithmétique sur des nombres entiers, plutôt que son module d'arithmétique sur des nombres flottants. En particulier, une précision de codage sur des mots de 1 bit correspond à des calculs en logique binaire, qui sont particulièrement simples à réaliser pour un processeur.

L'enjeu de la quantification est alors de conserver une performance proche de la performance optimale, tout en réduisant le coût mémoire et calculatoire du réseau de neurones, sachant que la performance optimale est obtenue pour ce même réseau de neurones mais avec des variables codées en précision flottante entrainé pour la tâche demandée.

Il existe deux grandes familles de techniques de quantification :

- Les techniques de quantification post-entrainement - PTQ (ou « Post-Training Quantization» en anglais) : on considère un réseau de neurones en précision flottante déjà entrainé sur la tâche à réaliser et on quantifie ses paramètres à la précision cible souhaitée. Éventuellement, une fois que la précision des paramètres a été réduite, on réalise une phase de réentrainement du réseau de neurones en précision réduite, mais avec une base d'entrainement de taille réduite par rapport à celle utilisée pour l'entrainement du réseau de neurones en précision flottante.
- Les techniques d'entrainement sensible à la quantification - QAT (« Quantization-Aware Training ») : le réseau de neurones est entrainé directement dans le but d'être quantifié. En particulier, les phases d'inférence de l'entrainement s'effectuent avec des variables quantifiées tandis que les opérations de rétropropagation s'effectuent généralement avec des gradients en précision flottante souvent avec une précision bien supérieure à la précision de quantification utilisée pour l'inférence. Alternativement, lors des phases de rétropropagation, il est également possible d'utiliser des gradients quantifiés avec une précision similaire ou différente à celle utilisée pour les phases d'inférence. Ainsi, une erreur de quantification est accumulée dans la fonction coût du réseau de neurones. L'entrainement du réseau de neurones permet alors de trouver les paramètres quantifiés du réseau minimisant la fonction coût. En résumé, les techniques d'entrainement sensibles à la quantification utilisent des paramètres et des valeurs d'activation quantifiés pendant l'entrainement. L'entrainement s'effectue généralement à l'aide de l'intégralité des données de la base d'entrainement. Ces techniques sont moins contraintes (accès aux données, temps d'entrainement illimité), mais sont généralement plus difficiles et beaucoup plus longues à exécuter et à faire converger.

Parmi les techniques QAT les plus récentes, on peut citer :

- la technique d'entrainement à échelle ajustée - SAT (« scale-adjusted training »), présentée par exemple dans l'article de Qing Jin et al, « Towards Efficient Training for Neural Network Quantization », arXiv:1912.10207 ;
- la technique de quantification à taille de marche apprise - LSQ (« learned step size quantization »), présentée par exemple dans l'article de Steven K. Esser et al, « Learned Step Size Quantization », arXiv:1902.08153 ; et,
- la technique de quantification non-uniforme à uniforme - N2UQ (« Nonuniform-to-Uniform Quantization»), présentée par exemple dans l'article de Zechun Liu et al, « Nonuniform-to-Uniform Quantization: Towards Accurate Quantization via Generalized Straight-Through Estimation », arXiv:2111.14826.

Le but de la présente invention est de proposer une amélioration aux techniques d'entrainement sensible à la quantification - QAT.

Pour cela l'invention a pour objet un procédé d'apprentissage, un procédé de configuration d'un circuit de calcul cible, un programme d'ordinateur et un système de contrôle selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

[Fig 1] La figure 1 est une représentation schématique d'un réseau de neurones ResNet et des couches qui composent un étage de ce réseau ;

[Fig 2] La figure 2 est une représentation schématique d'une couche de convolution en mettant en oeuvre une technique d'entrainement sensible à la quantification ;

[Fig 3] La figure 3 est une représentation schématique de la mise en oeuvre de l'entrainement de la couche de convolution de la figure 2 ;

[Fig 4] La figure 4 est une représentation schématique d'une couche d'activation en mettant en oeuvre une technique d'entrainement sensible à la quantification du type SAT;

[Fig 5] La figure 5 est une représentation sous forme de bloc d'un mode de réalisation procédé d'entrainement selon l'invention ;

[Fig 6] La figure 6 est une représentation schématique de la mise en oeuvre de l'entrainement d'une couche d'activation en mettant en oeuvre une technique d'entrainement sensible à la quantification du type N2UQ ; et,

[Fig 7] La figure 7 est une représentation schématique d'un système informatique, comme un calculateur d'entrainement pour l'entrainement d'un RN conformément au procédé selon l'invention ou un calculateur cible pour l'exécution du RN entrainé.

Un réseau de neurones - RN (ou modèle) est entrainé sur un calculateur d'entrainement, de manière à obtenir un réseau de neurones entrainé (ou modèle entrainé).

Le RN entrainé est ensuite téléchargé sur un calculateur cible pour son utilisation.

Le calculateur d'entrainement n'est en général pas ou peu limité dans ses capacités de calcul et de mémorisation, au contraire du calculateur cible (comme par exemple un calculateur embarqué à bord d'un véhicule, notamment d'un aéronef), destiné à exécuter le RN entrainé.

Un calculateur, comme le calculateur d'entrainement ou le calculateur cible, peut être un ordinateur comportant des moyens de calcul, tels qu'un processeur, et des moyens de mémorisation, tels qu'une mémoire. La mémoire stocke notamment les instructions de programmes d'ordinateur.

Néanmoins, l'invention présente tout son intérêt lorsque le RN entraîné est mis en oeuvre par une calculateur cible qui correspond à un coprocesseur ou à un circuit de calcul, notamment optimisé pour le calcul neuronal, comme une unité arithmétique et logique - ALU (« arithmetic logic unit », un circuit logique programmable - FPGA (« field-programmable gate array »), ou l'équivalent. De tels circuits de calcul présentent des capacités de mémorisation et de calcul minimalistes.

Un exemple de mode de mise en oeuvre du procédé d'apprentissage selon la présente invention consiste en l'exécution d'un programme par le calculateur d'entrainement, le programme étant par exemple stocké dans une mémoire du calculateur.

Alternativement, il est possible de mettre en oeuvre le procédé d'apprentissage selon la présente invention en utilisant un circuit dédié au calcul neuronal, tel qu'un accélérateur neuronal, qui permet de faire de l'apprentissage sans passer forcément par l'exécution d'un programme d'ordinateur pour l'ensemble des opérations du procédé d'apprentissage. En effet, il est possible que toutes ou certaines opérations du procédé d'apprentissage soient réalisées par du matériel dédié, type calculateur ou un circuit logique implémentant une machine à états finis.

Le procédé d'apprentissage selon l'invention vise à entrainer un réseau de neurones - RN.

Dans la présente description, le RN 1 à entrainer relève par exemple de l'architecture ResNet.

L'architecture ResNet est connue en tant que telle. Elle est par exemple décrite dans l'article Kaiming He et al, « Deep Residual Learning for Image Recognition », arXiv:1512.03385.

Le RN 1 est par exemple adapté pour une tâche de classification d'image.

Ainsi, l'instance appliquée en entrée du RN 1 est une image, qui a par exemple une résolution de trois canaux (Rouge, Vert et Bleu).

La prédiction délivrée en sortie du RN 1 est alors une probabilité d'appartenance à une classe parmi une pluralité de classes, chaque classe correspondant à un motif que l'on cherche à reconnaître dans les images analysées.

Le RN 1 est constitué d'une pluralité d'étages.

Il comporte un étage d'entrée 10, un étage de sortie 60, et une succession d'étages intermédiaires 20, 30, 40 et 50.

L'étage d'entrée comporte par exemple un bloc 11 et l'étage de sortie comporte par exemple un bloc 61.

Les étages intermédiaires sont constitués d'une pluralité de blocs.

En passant d'un étage à l'autre, le nombre de canaux est doublé.

Les blocs d'un même étage présentent le même nombre de canaux.

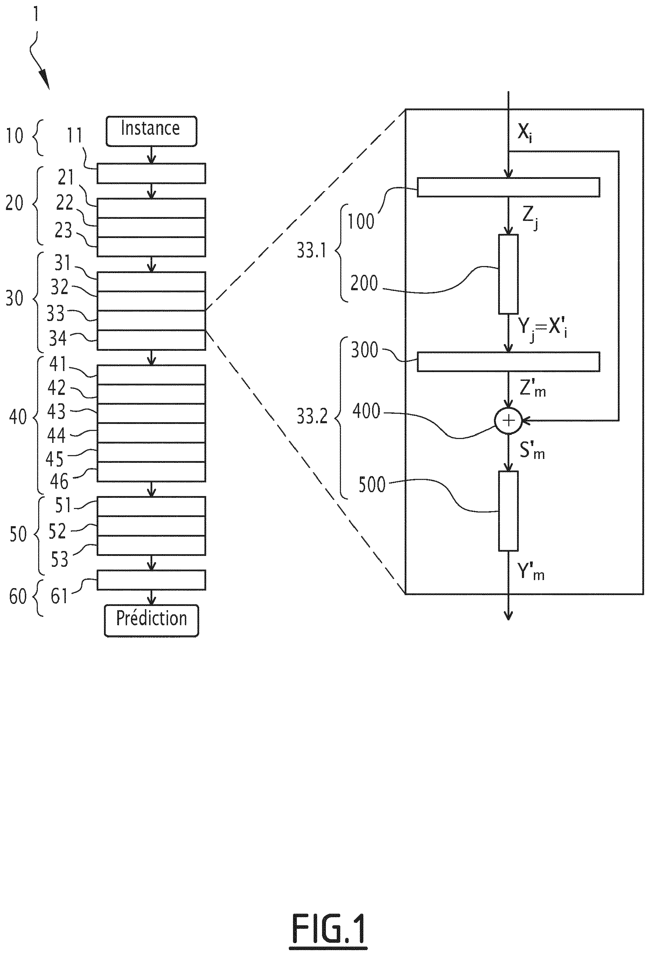

Ainsi, sur l'exemple de la figure 1 : le bloc 20 comporte les étages 21, 22 et 23, ayant par exemple 64 canaux ; le bloc 30 comporte les étages 31, 32, 33 et 34 ayant par exemple 128 canaux ; le bloc 40 comporte les étages 41, 42, 43, 44, 45, et 46, ayant par exemple 256 canaux ; et le bloc 50 comporte les étages 51, 52 et 53, ayant par exemple 512 canaux.

Les blocs des étages intermédiaires présentent une structure identique. Cette structure est détaillée sur la partie droite de la figure 1 par exemple pour le bloc 33.

La valeur d'entrée du bloc est notée $X_i$ et la valeur de sortie du bloc est notée Y'm.

Un bloc comporte deux couches de neurones successives, respectivement 33_1 et 33_2.

La valeur d'entrée de la première couche de neurones 33_1 est la valeur d'entrée $X_i$ du bloc.

La première couche de neurones 33_1 comporte une première couche d'opération 100, qui, à partir de la valeur d'entrée de la première couche de neurones, $X_i$, permet d'obtenir une valeur intermédiaire de la première couche de neurones, $Z_j$.

La première couche de neurones 33_1 comporte ensuite une première couche d'activation 200, qui, à partir de la valeur intermédiaire de la première couche de neurones, $Z_j$, permet d'obtenir une valeur de sortie de la première couche de neurones, ou valeur d'activation ou activation, $Y_j$.

La valeur d' entrée de la seconde couche de neurones 33_2 est notée $X'_i$. Elle est égale à la valeur d'activation la première couche de neurones $Y_j$.

La seconde couche de neurones 33_2 comporte une seconde couche d'opération 300, qui, à partir de la valeur d'entrée de la seconde couche de neurones, $X'_i$ permet d'obtenir une valeur intermédiaire de la seconde couche de neurones, $Z'_m$.

La seconde couche de neurones 33_2 comporte ensuite une couche de sommation 400 effectuant la somme de la valeur intermédiaire de la seconde couche de neurones $Z'_m$ et de la valeur d'entrée du bloc, $X_i$ pour obtenir une valeur de sortie de sommation, $S'_m$.

Enfin, La seconde couche de neurones 33_2 comporte une seconde couche d'activation 500, qui, à partir de la valeur de sortie de sommation, $S'_m$, permet d'obtenir une valeur de sortie de la seconde couche de neurones, ou valeur d'activation ou activation, $Y'_m$.

La valeur d'activation de la seconde couche de neurones, $Y'm$, est la valeur de sortie du bloc.

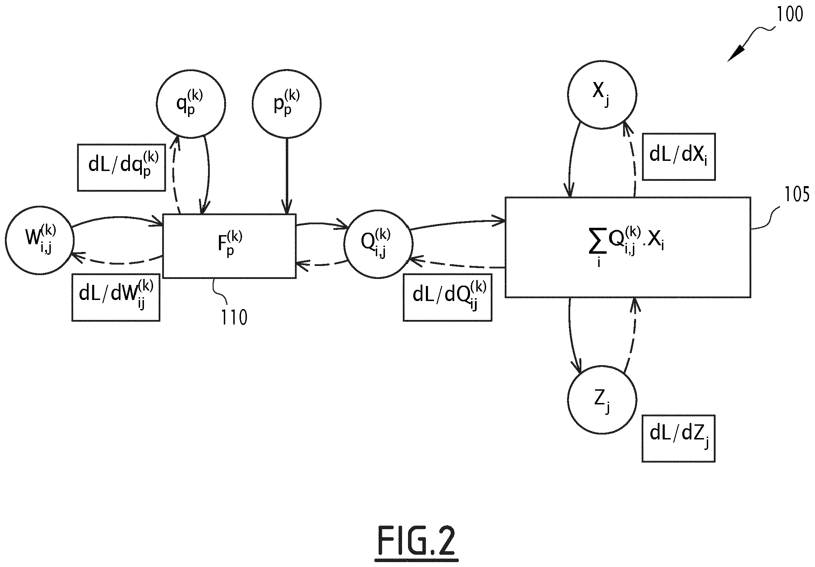

La figure 2 permet d'expliquer le principe d'une technique d'entrainement sensible à la quantification - QAT (« Quantification - Aware Training » - QAT), pour le cas d'une couche d'opération, comme la couche d'opération 100 d'un bloc intermédiaire du RN 1.

La couche d'opération 100 comporte un bloc de convolution 105 et un bloc de quantification des poids 110.

A l'époque de rang k de l'entrainement (k nombre entier entre 1 et K), pour la phase d'inférence, le bloc de convolution 105 effectue l'opération élémentaire de convolution sur la valeur entrée $X_i$ pour calculer la valeur intermédiaire $Z_j$, opération élémentaire pouvant par exemple prendre la forme générique :

$$Z_j = \sum_i Q_{i,j}^{(k)} . X_i$$

où les $Q_{i,j}^{(k)}$ sont les poids de la convolution à l'époque k. Ce sont les paramètres de la couche de convolution.

Les poids $Q_{i,j}^{(k)}$ sont des poids quantifiés.

Ils sont déterminés au début de la phase d'inférence de l'époque k, à partir de poids non quantifiés $W_{i,j}^{(k)}$.

C'est le bloc de quantification des poids 110 qui effectue cette opération de quantification des poids en appliquant une fonction de quantification des poids, $F_p^{(k)}$.

La fonction de quantification des poids, $F_p^{(k)}$, est une fonction en escalier, sur un intervalle, de préférence symétrique autour de la valeur nulle et borné par une valeur de poids maximale.

Le nombre de paliers est la précision $p_p^{(k)}$ de la fonction de quantification des poids, aussi dénommée précision de quantification.

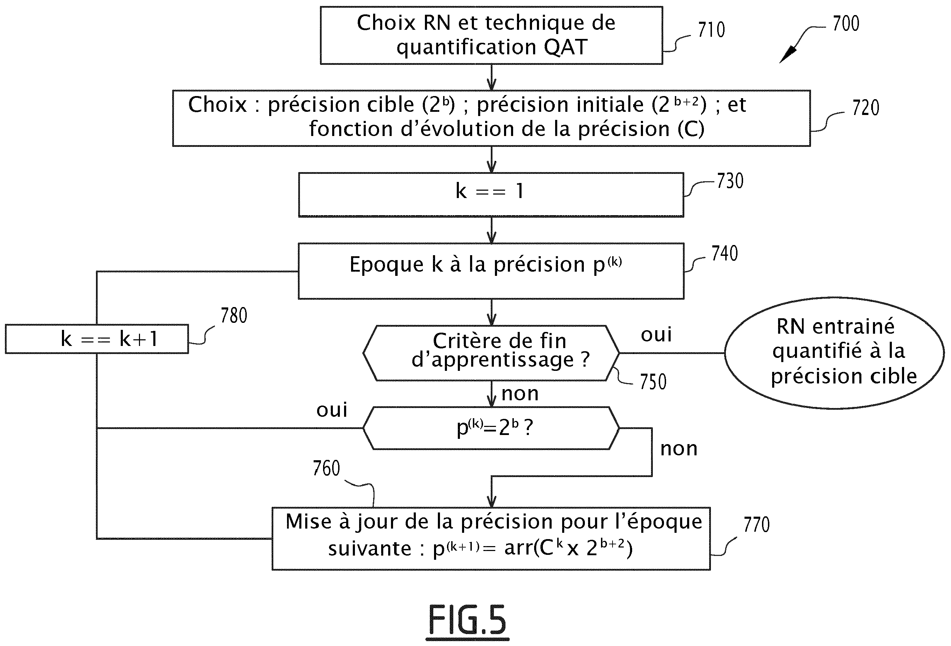

L'espacement entre deux paliers successifs (ou pas de quantification) est de préférence uniforme mais pourrait ne pas l'être. Notamment, les paliers peuvent ne pas être uniformément répartis dans l'intervalle si une fonction de changement d'échelle permet de passer d'une répartition uniforme des paliers à une répartition non uniforme des paliers. Autrement dit, la fonction de quantification utilisée dans le procédé d'apprentissage selon la présente invention doit pouvoir être paramétrable pour fixer le nombre de paliers et éventuellement la position de ces paliers, afin de pouvoir faire varier ces deux paramètres au fur et à mesure des étapes du procédé d'apprentissage (d'une époque à l'autre) comme cela sera décrit en détail ci-après en relation avec la figure 5. Il est à noter que lorsque les paliers de la fonction de quantification ne suivent pas une répartition uniforme, une position de chacun des paliers constitue un paramètre du réseau de neurones, qui est appris soit en tant que telle, soit par ajustement des autres paramètres du réseau de neurones, la fonction permettant de passer d'une répartition non uniforme à une répartition uniforme étant absorbée par ajustement des paramètres des autres couches.

Le bloc 110 effectue une quantification avec une précision de quantification des poids $p_p^{(k)}$. C'est-à-dire que les valeurs possibles d'un poids quantifié $Q_{i,j}^{(k)}$ sont au nombre de $p_p^{(k)}$.

La fonction de quantification appliquée par le bloc 110 peut éventuellement être paramétrée par un ou plusieurs paramètres de quantification des poids $q_p^{(k)}$. Il s'agit de paramètres appris au cours de l'entrainement au même titre que les autres paramètres du RN 1, notamment les paramètres de poids non quantifiés $W_{i,j}^{(k)}$.

Plus précisément, dans le cas par exemple de la technique d'entrainement à échelle ajustée - SAT, le bloc de quantification 110 effectue d'abord une première opération de calage (« clamping ») pour contraindre la valeur des poids non-quantifiés dans un intervalle entre 0 et 1.

Cette opération de « projection » des poids non-quantifiés permet d'obtenir des poids normalisés $\widetilde{W}_{i,j}^{(k)}$. Cette opération consiste à effectuer par exemple le calcul suivant :

$$\widetilde{W}_{i,j}^{(k)} = \frac{1}{2}\left( \frac{\tanh W_{i,j}^{(k)}}{\max_{r,s}\left|\tanh W_{r,s}^{(k)}\right|} + 1 \right)$$

Le bloc de quantification 110 effectue ensuite la quantification proprement dite pour déterminer les poids quantifiés.

Dans le cas de la technique SAT, cette opération consiste à effectuer par exemple le calcul suivant :

$$Q_{i,j}^{(k)} = 2.\, q\left(\widetilde{W}_{i,j}^{(k)}\right) - 1$$

Où la fonction $q$ est définie par :

$$q(x) = \frac{1}{a}\, arr(ax)$$

Dans laquelle la variable $a$ est le pas de quantification, c'est-à-dire l'inverse du nombre de paliers de quantification moins 1 $\left(a = \frac{1}{p_p^{(k)}-1}\right)$, et arr(.) est la fonction arrondi.

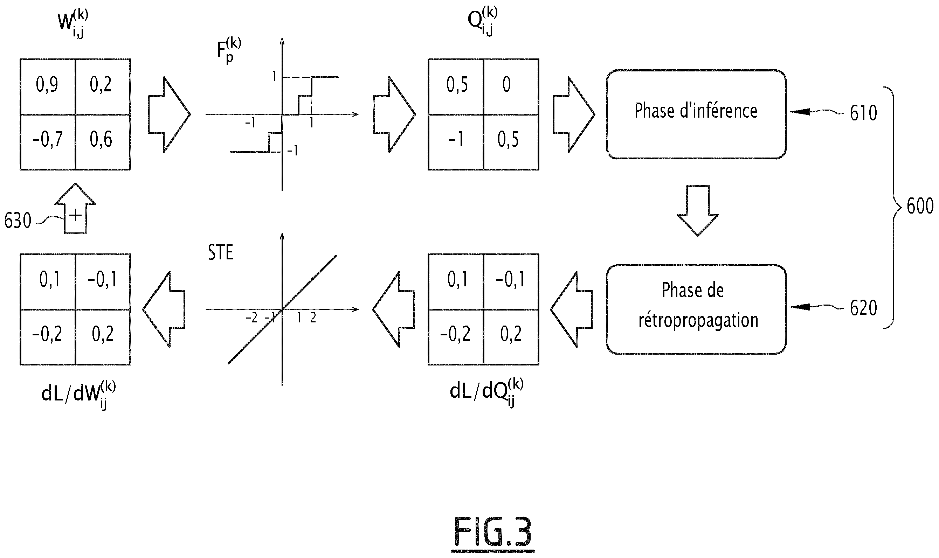

Cette opération de quantification est illustrée schématiquement sur la partie supérieure de la figure 3 représentant le processus d'apprentissage 600. L'application de la fonction de quantification $F_p^{(k)}$ sur une matrice 2x2 de poids non quantifiés $W_{i,j}^{(k)}$ permet d'obtenir une matrice 2x2 de poids quantifiés $Q_{i,j}^{(k)}$.

On constate que la technique SAT est particulièrement simple puisqu'elle n'utilise pas de paramètre de quantification pour les poids $q_p^{(k)}$.

Les poids quantifiés sont calculés au début de chaque époque.

Ce calcul est suivi de la phase d'inférence de la k^ième époque de l'apprentissage (étape 610 sur la figure 3), les instances labellisées d'un échantillon (« batch ») extrait de la base d'apprentissage (« dataset ») sont successivement appliquées en entrée du RN 1 afin de calculer les prédictions correspondantes par le RN 1 (qui utilise la valeur des paramètres à l'itération k, comme les poids $Q_{ij}^{(k)}$ ou les paramètres de quantification $q_p^{(k)}$).

À la fin de la phase d'inférence, l'époque k du processus d'apprentissage 600 se poursuit par une phase de rétropropagation (« backward pass ») 620.

Une fonction de perte L (« loss ») est évaluée à partir de la prédiction attendue et de la prédiction obtenue.

La technique de rétropropagation (« backpropagation ») du gradient de la fonction de perte est mise en oeuvre pour calculer une mise à jour de chacun des paramètres du RN 1, y compris les paramètres de quantification du RN (lorsqu'il y en a).

Le gradient de la fonction de perte L par rapport à une variable x est notée : $\frac{dL}{dx}$.

La propriété de chainage des dérivées permet de calculer le gradient de la fonction de perte par rapport à la variable *x* à partir des gradients de la fonction de perte par rapport aux variables intermédiaires entre la sortie du RN et le paramètre *x* considéré.

Ainsi, le gradient est rétropropagé depuis les couches les plus hautes du RN, vers les couches la plus basses du RN.

Plus particulièrement, pour la couche d'opération 100, comme illustré sur la figure 2, la rétropropagation depuis les couches supérieures du RN 1 permet de déterminer le gradient de la fonction de perte par rapport à la valeur intermédiaire $Z_j$ : $dL/dZ_j$.

La rétropropagation de ce gradient à travers le bloc 105 par rapport à la valeur d'entrée $X_i$ (en tenant compte de la variation $dZ_j/dX_i$) permet de remonter au gradient de la fonction de perte par rapport à la valeur d'entrée $X_i$ : $dL/dX_i$.

La rétropropagation de ce gradient à travers le bloc 105 par rapport à chacun des poids quantifiés $Q_{ij}^{(k)}$ (en tenant compte de la variation $dZ_j/dQ_{ij}^{(k)}$) permet de remonter aux gradients de la fonction de perte par rapport aux poids quantifiés : $dL/dQ_{ij}^{(k)}$.

La rétropropagation du gradient $dL/dQ_{ij}^{(k)}$ à travers le bloc 110 par rapport aux poids non quantifiés $W_{ij}^{(k)}$ permet de remonter au gradient de la fonction de perte par rapport à aux poids non quantifiés : $dL/dW_{ij}^{(k)}$.

Enfin, la rétropropagation du gradient $dL/dQ_{ij}^{(k)}$ à travers le bloc 110 par rapport à d'éventuels paramètres de quantification $q_p^{(k)}$ permet de remonter au gradient de la fonction de perte par rapport à chaque paramètre de quantification des poids : $dL/dq_p^{(k)}$.

La rétropropagation à travers le bloc de quantification des poids 110 est altérée puisque la fonction de quantification des poids $F_p^{(k)}$ n'est pas continue-dérivable.

Selon la technique d'estimateur de passage direct - STE (« Straight Through Estimator »), un estimateur STE résultant du lissage de la fonction de quantification des poids $F_p^{(k)}$ est utilisé.

Par exemple, dans la technique SAT, on considère que la dérivée de la fonction *q* utilisée dans la définition de la fonction de quantification des poids vaut 1 :

$$\frac{d}{dx}[q(x)] = 1$$

Une fois effectué le calcul du gradient de la fonction de perte vis-à-vis de tel ou tel paramètre, il est utilisé pour mettre à jour ce paramètre.

Comme illustré par l'étape 630 sur la figure 3, à la fin de l'époque k et de la phase de rétropropagation du gradient, la valeur de chaque poids non quantifié $W_{ij}^{(k)}$ est mise à jour avec le gradient calculé $dL/dW_{ij}^{(k)}$. Cette nouvelle valeur des poids non quantifiés sera celle utilisée pour l'époque k+1 suivante.

Ce processus d'entrainement avec des phases d'inférences et de rétropropagation est itéré pour chaque époque.

L'entrainement se termine lorsqu'un critère est vérifié. Il peut s'agir d'un critère sur le nombre d'époques. Par exemple, on considère généralement qu'une centaine d'époques (K=100) permet d'assurer une convergence des paramètres d'un ResNet. Bien évidemment, la vitesse de convergence dépend de la tâche, de la base d'entrainement et de la complexité du modèle.

Il peut s'agir d'un critère sur la valeur de la fonction de perte et/ou de son gradient, comme par exemple une valeur au-dessous d'une valeur seuil.

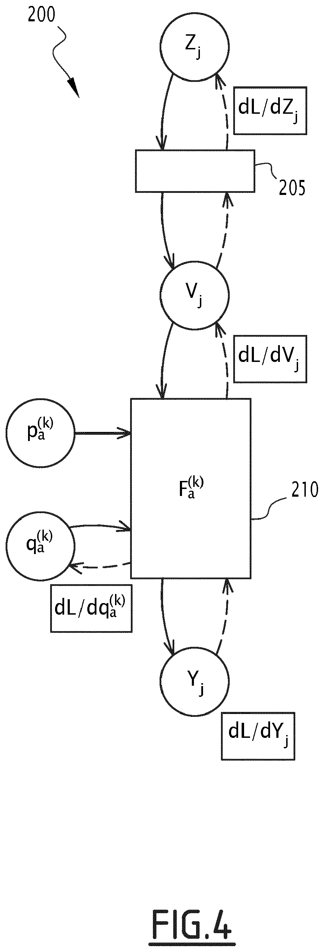

La figure 4 permet d'expliquer le principe d'une technique - QAT pour le cas d'une couche d'activation, comme la couche 200 d'un étage intermédiaire du RN 1.

La couche d'activation 200 comporte un bloc d'activation 205 et un bloc de quantification des activations 210.

A l'époque de rang k de l'entrainement (k nombre entier entre 1 et K), pour une phase d'inférence, le bloc d'activation 205 effectue l'opération élémentaire d'activation sur valeur intermédiaire $Z_j$ pour calculer la valeur d'activation non quantifiée $V_j$. Cette opération élémentaire consiste à mettre en oeuvre une fonction d'activation, comme par exemple une fonction non linéaire, comme la fonction ReLu.

Puis, le bloc de quantification des activations 210 effectue la quantification proprement dite permettant d'obtenir la valeur d'activation quantifiée $Y_j$ à partir de la valeur d'activation non quantifiée $V_j$.

Le bloc de quantification des activations 210 met en oeuvre une fonction de quantification d'activation, $F_a^{(k)}$ .

Cette fonction de quantification se caractérise par une précision de quantification, $p_a^{(k)}$ , c'est-à-dire le nombre de pas de quantification utilisés dans la fonction de quantification.

L'opération de quantification effectuée par le bloc 210 peut éventuellement être paramétrée par un ou plusieurs paramètres de quantification d'activation $q_a^{(k)}$ . Il s'agit de paramètres appris au cours de l'entrainement au même titre que les autres paramètres du RN.

Plus précisément, dans le cas par exemple de la technique SAT, le bloc 210 effectue d'abord une première opération de calage (« clamping ») pour contraindre la valeur de la valeur d'activation non quantifiée $V_j$ dans un intervalle entre $\beta$ et $\alpha$. L'intervalle peut être asymétrique, mais il est de préférence choisi symétrique avec : $\beta = -\alpha$.

Cette opération de « projection » des activations non quantifiées permet d'obtenir une sortie $\tilde{V}_j$ normalisée :

$$\tilde{V}_j = \frac{1}{2}\left[|V_j| - |V_j - \alpha| + \alpha\right]$$

Le bloc 210 effectue la quantification proprement dite pour déterminer les valeurs d'activation quantifiées $Y_j$. Le calcul suivant est par exemple effectué :

$$Y_j = \alpha . q\left(\frac{\tilde{V}_j}{\alpha}\right)$$

Où la fonction $q(x)$ de la variable $x$ est par exemple la même que celle utilisée par le bloc 100.

On constate que la technique SAT utilise un paramètre de quantification d'activation, $q_a^{(k)}$ , en l'occurrence le paramètre $\alpha$.

Pour la phase d'inférence du processus d'apprentissage, les instances labellisées d'un échantillon (« batch ») extrait de la base d'apprentissage (« dataset ») sont successivement appliquées en entrée du RN 1 afin de calculer la sortie correspondante (le bloc 210 utilise la valeur des paramètres à l'itération k, comme le paramètre $\alpha$).

Lorsque toutes les données de l'échantillon ont été utilisées, une étape de rétropropagation est réalisée.

Un écart est calculé entre la prédiction calculée par le RN 1 et la prédiction attendue pour chaque instance de l'échantillon.

Une fonction de perte L (« loss ») est évaluée à partir des différents écarts calculés pour chaque instance de l'échantillon.

La technique de rétropropagation du gradient de la fonction de perte est mise en oeuvre pour calculer une mise à jour de chacun des paramètres du RN 1.

Plus particulièrement, pour la couche d'activation 200, comme illustré sur la figure 4, la rétropropagation depuis les couches supérieures du RN 1 permet de déterminer le gradient de la fonction de perte par rapport à la valeur $Y_j$ : $dL/dY_j$.

Par rétropropagation du gradient $dL/dY_j$ à travers le bloc 210, on calcule le gradient de la fonction de perte par rapport à la variable $V_j$ : $dL/dV_j$, puis par rétropropagation de ce dernier gradient à travers le bloc 205, on calcule le gradient de la fonction de perte par rapport à la valeur $Z_j$ : $dL/dZ_j$.

La rétropropagation du gradient $dL/dY_j$ à travers le bloc 210 par rapport aux paramètres de quantification d'activation $q_a^{(k)}$ permet de remonter au gradient de la fonction de perte par rapport à chaque paramètre de quantification d'activation : $dL/dq_a^{(k)}$ .

La rétropropagation à travers le bloc de quantification 210 doit être altérée puisque la fonction de quantification d'activation $F_a^{(k)}$ n'est pas continue-dérivable.

Selon la technique d'estimateur de passage direct - STE (« Straight Through Estimator »), un estimateur résultant du lissage de la fonction de quantification d'activation est utilisé.

Par exemple, dans la technique SAT, on considère que la dérivée par rapport à la variable x de la fonction q vaut 1 :

$$\frac{d}{dx}[q(x)] \; := 1$$

et que la dérivée de la fonction q par rapport au paramètre de quantification α vaut :

$$\frac{\delta q}{\delta \alpha} = \begin{cases} q(x) - x & pour\ x < \alpha \\ 1 & pour\ x > \alpha \end{cases}$$

Ce lissage de la fonction de quantification permet de propager la variation de la fonction de perte non seulement à la valeur d'entrée de ce bloc 210, mais également aux paramètres de quantification d'activation.

A la fin de l'époque k et de la procédure de rétropropagation du gradient, la valeur de chaque paramètre de quantification d'activation est mise à jour avec le gradient calculé. Cette nouvelle valeur sera celle utilisée pour l'époque k+1 suivante.

Ce processus de phases d'inférence et de rétropropagation est itéré pour chaque époque, conduisant à l'apprentissage de la valeur optimale des paramètres de quantification d'activation, le paramètre α pour le cas particulier de la technique SAT.

L'apport spécifique de la présente l'invention va maintenant être présenté en relation avec le procédé d'apprentissage représenté sur la figure 5. Cette figure présente, sous forme de blocs, un mode de réalisation préféré du procédé selon l'invention.

De manière générale, le procédé selon l'invention consiste à modifier la précision de quantification $p^{(k)}$ ( $p_p^{(k)}$ pour une couche d'opération et $p_a^{(k)}$ pour une couche d'activation par exemple) des fonctions de quantification, de manière à ce qu'au cours de l'apprentissage et de l'itération des époques, la précision soit progressivement ramenée, d'une précision de quantification initiale plus élevée vers une précision de quantification cible plus basse.

Il faut souligner qu'il s'agit bien de la modification de la précision de quantification (c'est-à-dire le nombre de paliers des fonctions de quantification). Cette précision de quantification est un nombre entier. Il peut être modifié d'une unité ou plus d'une époque à une autre. Il ne s'agit pas d'une précision de codage des variables, c'est-à-dire de nombre de bits sur lequel une variable (paramètre ou valeur) est codée. D'ailleurs, pendant l'apprentissage, il est préférable de coder les variables en précision flottante (32 bits). Cependant, le but de la quantification étant malgré tout d'obtenir un RN entrainé dont les variables sont codées sur un nombre réduit de bit, par exemple b bits, la précision de quantification cible sera de préférence prise égale à la précision de codage recherchée, en l'occurrence $2^b$.

Ainsi dans une étape 710 du procédé 700, le programmeur fait un choix de l'architecture du réseau de neurones à quantifier et définit une technique de quantification - QAT particulière.

Dans une étape 720, le programmeur fait un choix sur une précision de quantification cible. Si par exemple le nombre de bits sur lequel le programmeur souhaite coder les variables du modèle appris est b, la précision de quantification cible est choisie égale à $2^b$.

Le programmeur choisit également la précision initiale $p^{(1)}$. Elle doit être plus élevée que la précision cible. La précision initiale peut par exemple être définie comme égale à $2^{b+\Delta}$, avec Δ entier supérieur ou égal à 1, de préférence égal à 2.

Enfin, le programmeur définit une fonction d'évolution définissant la précision de quantification à l'époque k. Par exemple la fonction d'évolution est telle que :

$$p^{(k)} = arr\left(C^k . 2^{b+\Delta}\right) \qquad (1)$$

où *arr*(.) est la fonction d'arrondi, C est un facteur de décroissance inférieur à l'unité, de préférence proche de l'unité, pour une diminution lente de la précision de quantification d'une époque à l'autre. C est par exemple choisi égal à 0,97.

Dans l'étape 730, l'indice k de l'époque est initialisé à la valeur unité.

Pour chaque époque k, le procédé 700 prévoit les étapes 740 classiques d'un apprentissage avec mise en oeuvre d'une technique de quantification QAT.

Les phases d'inférence et de rétropropagation de l'époque k sont réalisées à la précision de quantification courante $p^{(k)}$. Dit autrement, la précision des fonctions de quantification mises en oeuvre à l'époque k aussi bien par une couche de convolution comme la couche 100 ou par une couche d'activation comme la couche 200, est égale à $p^{(k)}$.

À la fin de l'époque k, l'étape 750 permet de vérifier si le critère de fin d'apprentissage est rempli. Dans l'affirmative, le procédé 700 est terminé et les valeurs des valeurs du RN de la dernière époque sont les valeurs optimales qui définissent le RN entrainé.

Dans la négative, le procédé 700 se poursuit par une étape 760 consistant à comparer la précision de quantification courante $p^{(k)}$ avec la précision de quantification cible, dans notre exemple $2^b$.

Si la précision de quantification courante n'a pas encore atteint la précision de quantification cible, dans l'étape 770, la précision de quantification pour l'époque suivante $p^{(k+1)}$ est calculée en utilisant l'équation (1) ci-dessus.

Il est à noter que la fonction d'arrondi ne conduit pas systématiquement à une modification de la précision de quantification. Celle-ci peut rester constante sur un certain nombre d'époques successives avant d'être réduite d'une unité. La précision peut par conséquent ne pas être modifiée si la fonction d'arrondi ramène sur la valeur de précision précédente.

Par itérations successives, la précision des fonctions de quantification diminue progressivement au cours de l'entraînement.

L'entrainement se poursuit en réduisant la précision jusqu'à ce que la précision de quantification soit égale à la précision de quantification cible. C'est-à-dire jusqu'à l'époque $K_0$ telle que la précision $p^{(K_0)}$ soit égale à $2^b$.

Au-delà de cette époque, l'entraînement se poursuit, mais en maintenant la précision de quantification constante à la valeur de la précision de quantification cible (l'étape 770 n'est donc plus réalisée).

Ainsi, le procédé d'entrainement est réalisé avec la précision initiale $2^{b+\Delta}$ durant la première époque k=1, puis est progressivement diminuée, jusqu'à atteindre la précision cible en passant par différentes précisions de quantification intermédiaires. Une fois la précision de quantification cible atteinte, la précision des fonctions de quantification reste égale à la précision cible, jusqu'à la fin de l'entrainement.

Ce procédé d'entrainement permet d'obtenir un RN entrainé dont les variables sont quantifiées sur $2^b$ paliers. Ils peuvent donc être codés sur b bits.

Par exemple, afin de configurer un circuit de calcul cible avec un réseau de neurones entrainé, on réalise les étapes suivantes : fournir un circuit de calcul cible, dont les opérandes sont codées avec une précision de codage prédéfinie ; mettre en oeuvre le procédé d'apprentissage précédent en choisissant une précision cible égale à la précision de codage, pour obtenir un réseau de neurones entrainé dont les paramètres sont codés à la précision de codage ; et transférer le réseau de neurones entrainé sur le circuit de calcul cible.

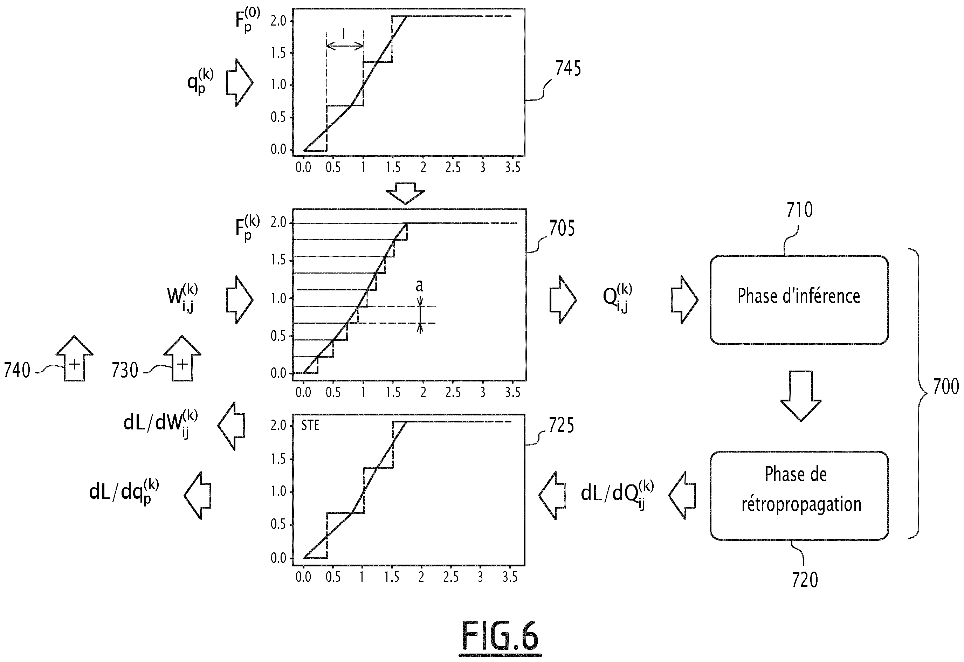

La figure 6 est une représentation schématique de la mise en oeuvre d'un procédé d'entrainement 700, par exemple sur une couche de convolution, en mettant en oeuvre une technique d'entrainement sensible à la quantification du type N2UQ.

La difficulté avec la technique N2UQ réside dans le fait que la longueur *l* de chaque palier de la fonction de quantification des poids $F_p^{(k)}$ est un paramètre de quantification $q_p^{(k)}$. Or, si l'on modifie la précision de la fonction de quantification au cours de l'entrainement, il sera difficile d'apprendre en même temps la valeur optimale de la longueur des paliers.

Pour la mise en oeuvre de la présente invention, deux fonctions de quantification sont utilisées : une fonction $F_p^{(0)}$ à la précision cible $p^{(0)}$ et une fonction $F_p^{(k)}$ à la précision courante de l'époque k ($p^{(k)}$).

Pour phase de rétropropagation 720, l'estimateur STE utilisé à l'étape 725 résulte du lissage de la fonction $F_p^{(0)}$ à la précision cible $p^{(0)}$. L'estimateur STE est obtenu en construisant une courbe continue, constituée de segments de pente constante, dont les extrémités reposent sur deux paliers consécutifs de la fonction $F_p^{(0)}$.

Cela permet de calculer le gradient de la fonction de perte pour les poids non quantifiés $dL/dW_{ij}^{(k)}$ et effectuer la mise à jour des poids non quantifiés $W_{ij}^{(k)}$ (étape 730).

Cela permet également de calculer le gradient de la fonction de perte par rapport aux paramètres de quantification $dL/dq_p^{(k)}$ et effectuer la mise à jour des paramètres de quantification $q_p^{(k)}$ (étape 740), notamment la longueur $l$ des paliers de la fonction de quantification des poids $F_p^{(0)}$ à la précision cible $p^{(0)}$.

Au début de la phase d'inférence 710, la fonction de quantification des poids $F_p^{(k)}$ à la précision $p^{(k)}$ est dérivée de la fonction de poids $F_p^{(0)}$ à la précision cible $p^{(0)}$ (étape 745). Il s'agit essentiellement de passer d'un nombre de paliers fixe (par exemple quatre pour la fonction $F_p^{(0)}$) à un autre nombre de paliers supérieur ou égal (par exemple dix pour la fonction $F_p^{(k)}$ à l'époque k), avec la contrainte d'avoir des paliers espacés verticalement du même pas a.

Puis la fonction de poids $F_p^{(k)}$ à la précision $p^{(k)}$ est utilisée pour déterminer (à l'étape 705) les poids quantifiés $Q_{ij}^{(k)}$ à partir des poids non quantifiés $W_{ij}^{(k)}$.

De cette manière, on sépare l'apprentissage des paramètres de quantification, de la modification progressive de la précision de quantification, ce qui permet au procédé d'apprentissage de converger.

On notera qu'avec les fonctions de quantification représentées sur la figure 6, les poids quantifiés et non quantifiés sont dans l'intervalle entre 0 et 2. L'opération de « clamping » est intégrée à la fonction de quantification des poids.

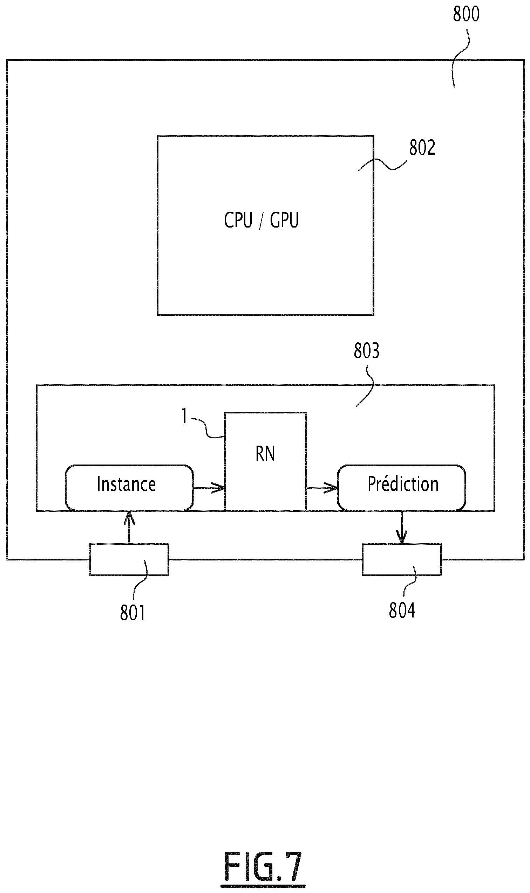

La figure 7 est une représentation schématique d'un système de contrôle 800 selon un exemple de réalisation de la présente invention.

Le système de contrôle 800 met en oeuvre le réseau de neurones 1 dans sa version non entrainée (et le système de contrôle agit alors en tant que calculateur d'entrainement) et/ou dans sa version entrainée (et le système de contrôle agit alors en tant que calculateur cible). La version apprise du réseau de neurones 1 résulte de la mise en oeuvre d'un procédé d'apprentissage conforme à la présente invention.

Des données d'entrée physiques, qui peuvent inclure des valeurs x, y et z, sont capturées par au moins un capteur 801. Le capteur 801 est configuré pour délivrer les valeurs capturées en tant qu'instances appliquées en entrée du réseau de neurones 1.

Le réseau de neurones 1 est par exemple implémenté sous forme matérielle (« hardware ») et/ou sous forme logicielle (« software ») par un circuit de calcul 802, tel qu'un processeur central - CPU (« Central Processing Unit ») ou un processeur graphique - GPU (« Graphics Processing Unit »).

Lorsque c'est la version apprise du RN 1 qui est exécutée, le circuit de calcul 802 s'appuie notamment sur des moyens de mémorisation 803 du système de contrôle 800, qui stockent l'ensemble des paramètres appris du RN 1. Chacun de ces paramètres est quantifié à la précision de quantification cible définie lors de la mise en oeuvre du procédé d'apprentissage selon la présente invention. Les moyens de mémorisation 803 présentent alors une capacité de mémoriser des opérandes définies un nombre de bits égal à la précision cible, par exemple $2^b$, avec b entier entre 1 et 16.

Lorsque c'est la version non apprise du RN 1 qui est exécutée, le circuit de calcul 802 exécute le procédé d'apprentissage selon l'invention. Dans ce cas, il n'y a pas de contrainte sur la taille des opérantes des moyens de mémorisation 803, si ce n'est qu'elle doit être supérieure ou égale à la précision cible de manière à stocker la valeur des paramètres du réseau de neurones au cours de leur évaluation.

L'exécution du RN 1 permet d'obtenir une prédiction.

Lorsque c'est la version apprise du RN 1 qui est exécutée, cette prédiction est transmise à un dispositif 804.

Selon un ou plusieurs modes de réalisation, le capteur 801 est un capteur optique. Par exemple, le capteur 801 est un capteur optique ayant un vecteur unidimensionnel ou bidimensionnel de pixels. Le capteur optique est par exemple un capteur de lumière visible, un capteur infrarouge, un capteur ultrasonore, un capteur de profondeur d'image, tel qu'un LIDAR (« LIght Détection And Ranging »).

Les données d'entrée physiques sont alors une ou plusieurs images capturées par le capteur optique, et le RN 1 a pour tâche de classifier la ou chaque image capturée en effectuant une analyse d'image. Une telle analyse peut permettre par exemple de déterminer une ou plusieurs actions à effectuer par le dispositif 804.

Alternativement ou en combinaison, le capteur 801 est un capteur de profondeur, un capteur de température, un microphone, ou n'importe quel type de capteur. Par exemple, le capteur 801 est un capteur de mesure de la température intérieure et/ou extérieure d'un système de chauffage/climatisation d'un bâtiment, comprenant par exemple une pompe à chaleur en tant que source principale d'énergie. Dans ces cas, le dispositif 804 est par exemple un circuit d'activation qui active/désactive le système de chauffage/climatisation.

Alternativement ou en combinaison, l'au moins un dispositif 804 est un écran d'affichage, un système robotique comme un bras robotisé adapté à arracher des mauvaises herbes ou à cueillir des fruits mûrs sur un arbre, un système automatique de direction ou de freinage d'un véhicule, ou un actionneur, notamment électronique, par exemple configuré pour contrôler le fonctionnement d'un ou de plusieurs circuits, comme réveiller un circuit à partir d'un mode veille, faire entrer un circuit dans un mode veille, faire en sorte qu'un circuit génère une sortie de texte, effectue une opération de codage ou de décodage de données, etc.

Il est à noter que l'on peut envisager un système de contrôle 800 mettant en oeuvre une version entrainée du réseau de neurones à une précision basse (par exemple dans un mode de fonctionnement à faible consommation d'énergie) et une version entrainée du même réseau de neurones à une précision haute (par exemple dans un mode de fonctionnement à consommation d'énergie plus élevée).

Variantes de réalisation

La présente invention peut s'appliquer à toute architecture de RN. La description précédente a montré la faisabilité sur des couches de convolution et des couches d'activation. Or, ces couches constituent la majeure partie des RNs, quelle que soit leur architecture.

Si la modification progressive de la précision des fonctions de quantification a été plus particulièrement présentée sur le cas de la technique SAT, on peut montrer mathématiquement qu'elle s'applique à tous types de technique de quantification QAT.

Si la modification progressive de la précision des fonctions de quantification a été plus particulièrement présentée sur le cas d'une technique scalaire, elle peut être étendue au cas d'une technique vectorielle.

Par scalaire, on entend une technique selon laquelle chaque variable du RN est quantifiée indépendamment des autres variables.

Par vectorielle, on entend une technique selon laquelle, pour l'ensemble des couches du RN, les variables d'une même couche sont d'abord regroupées pour former une pluralité de vecteurs, et chaque vecteur ainsi construit est ensuite associé à un code d'un livre de codes. Vecteurs et codes ont la même dimension. Le livre de code contient p codes. Au cours du procédé d'apprentissage, le livre de codes est appris en minimisant une distance entre vecteurs et codes associés. A l'issue de l'apprentissage, on substitue à chaque vecteur du RN, le code qui lui est associé dans le livres de codes appris pour obtenir le RN quantifié. La fonction de quantification est donc ici la projection des vecteurs du RN sur le livre de codes et la taille du livre de codes définit le nombre de paliers de quantification. Cette technique de quantification est par exemple exposée dans l'article de Pierre Stock et al., « And the Bit Goes Down: Revisiting the Quantization of Neural Networks », https://doi.org/10.48550/arXiv. 1907.05686.

Selon l'invention, alors que les variables du RN conservent la même résolution au cours du procédé d'apprentissage (codage en précision 32 bits par exemple), c'est la taille du livre de codes qui est diminuée progressivement au cours du procédé d'apprentissage. Dans cette variante de réalisation, la précision de quantification $p^{(k)}$ est donc donnée par la taille du livre de codes à l'époque k.

Il s'agit donc de réduire la taille du livre de codes à chaque époque du procédé d'apprentissage d'un nombre de code requis par la fonction d'évolution de la précision de quantification utilisée. Par exemple, un ou plusieurs codes sont supprimés du livre de codes de manière aléatoire, ou en moyennant deux codes proches selon une métrique prédéfinie, ou encore en ne conservant pas les codes associés à un petite nombre de vecteurs.

Par uniforme, on entend une technique selon laquelle les fonctions de quantification subdivisent l'intervalle des valeurs quantifiées en pas identiques. Eventuellement, comme indiqué précédemment, une métrique pourrait être appliquée pour modifier la taille des pas de quantification, mais cette métrique doit être prédéfinie et ne résulte pas par exemple d'une statistique sur les valeurs des paramètres à quantifier. On parlera d'une technique pseudo-uniforme.

En variante, au lieu d'utiliser des précisions de quantification initiale et cible qui sont des puissances de deux, d'autres valeurs de ces précisions de quantification sont envisageables. La seule contrainte est que la précision initiale soit choisie plus grande que la précision cible pour contraindre progressivement le modèle.

La fonction d'évolution de la précision de quantification permettant de modifier la précision de quantification d'une époque à l'autre peut être toute fonction amenant progressivement de la précision initiale à la précision cible.

Selon l'invention, la progressivité de la modification de la précision de quantification, c'est-à-dire la variation du nombre de paliers de quantification, est telle que la variation du nombre de paliers entre une époque précédente et une époque courante du procédé d'apprentissage est inférieure ou égale à une variation maximale du nombre de paliers, cette variation maximale du nombre de paliers étant inférieure strictement à la précision de quantification de l'époque précédente divisée par deux.

Dit autrement, pour passer par exemple d'une époque caractérisée par une précision égale par exemple à 32 paliers à une époque caractérisée par une précision égale par exemple à 16 paliers, le procédé selon l'invention prévoit de passer obligatoirement par une pluralité d'époques intermédiaires, caractérisées par des précisions de quantification intermédiaires, et la variation maximale du nombre de paliers entre les précisions de quantification intermédiaires de deux époques successives est égale par exemple à 1, 2 ou 3 paliers, mais reste bien inférieure à 16 paliers.

Ainsi entre deux époques caractérisées par des précisions qui s'expriment en puissance de deux, le procédé selon l'invention prévoit un certain nombre d'époques intermédiaires caractérisées par des précisions de quantification qui ne s'expriment pas en puissance de deux.

Si dans la description ci-dessus la fonction exponentielle $p^{(k)} = \mathrm{arr}(C^k.2^{b+\Delta})$ a été utilisée, en variante on pourrait utiliser d'autres fonctions de décroissance de la précision de quantification, comme la fonction linéaire :

$$p^{(k)} = \mathrm{arr}\left(\left(1 - \frac{k}{N}\right).2^{b+2} + \frac{k}{N}.2^b\right)$$ ou encore la fonction cosinus :

$$p^{(k)} = \mathrm{arr}(\cos(k.\pi/2N).2^{b+2} + \left(1 - \cos\left(k.\frac{\pi}{2N}\right)\right).2^b)$$ , avec k l'époque courante, N le nombre total d'époques, la précision de quantification initiale $p(1)$ étant ici par exemple égale à $2^{b+2}$ et la précision cible $p^c$ étant par exemple égale à $2^b$.

La fonction d'évolution pourrait même être telle que, durant un petit nombre d'époques intermédiaires, la précision augmente d'une époque à l'autre, afin d'aider par exemple à la convergence des paramètres et/ou des variables d'activation du RN, avant de diminuer vers la précision cible.

De préférence, la modification progressive de la précision de quantification est mise en oeuvre pour l'ensemble des fonctions de quantification de toutes les couches du RN simultanément. Cependant, en variante, seules certaines des fonctions de quantification pourraient faire l'objet d'une modification progressive de leur précision de quantification.

Eventuellement, la précision de quantification cible d'une fonction de quantification pourrait être différente de celle d'une autre fonction de quantification du RN. Cela permettrait par exemple d'obtenir un RN entraîné avec des variables codées sur différentes longueurs. D'ailleurs, pour la première couche d'un réseau de neurones comme ResNet, il est préférable de conserver une précision de codage supérieure ou égale à 8 bits, même si la précision de codage des autres couches du RN est plus réduite, afin de rester sensible aux données des images d'entrée.

Dans une variante de réalisation avantageuse du procédé d'apprentissage selon l'invention, au cours des premières époques, seule la précision des fonctions de quantification des couches les plus basses du RN est modifiée. La précision de quantification pour les couches les plus hautes du RN n'est pas modifiée pour permettre une adaptation des variables (paramètres et valeurs d'activation) de ces couches les plus hautes à la réduction de la précision sur les variables des couches les plus basse. Puis, au fur et à mesure de l'avancement de l'entrainement, on en vient à réduire également la précision des fonctions de quantification des couches les plus hautes. A la fin de l'entrainement, on obtient un RN entraîné dont tous les variables sont quantifiées avec la même précision cible.

Dans une autre variante de réalisation avantageuse du procédé d'apprentissage selon l'invention, le technique de quantification en précision mixte compatible avec le matériel - HMQ (« Hardware Friendly Mixed Précision Quantization»), présentée par exemple dans l'article de Hai Victor Habi et al, « HMQ: Hardware Friendly Mixed Précision Quantization Block for CNNs », arXiv:2007.09952, est mise en oeuvre afin de déterminer la précision optimale de chacune des couches du RN. Puis, le procédé d'apprentissage selon l'invention est mis en oeuvre afin de déterminer les paramètres quantifiés, pour une ou plusieurs, voire chacune, des couches du RN à la précision optimale cible correspondante. A la fin de l'entrainement, on obtient un RN entraîné dont tous les paramètres sont quantifiés avec la précision optimale relative à la couche à laquelle les paramètres appartiennent. Pour ce faire, pour la couche $i$ du RN,

$$p_i^{(1)} = 2^{b_i+\Delta}$$

le programmeur peut choisir la précision initiale , avec $2^{b_i}$ la précision cible propre à la couche i, déterminée par le HMQ, et $\Delta$ commun à toutes les couches du RN. A titre de variante, la valeur $\Delta$ peut être différente pour différentes couches du réseau de neurones.

**Revendications**

1. Procédé mis en oeuvre par ordinateur d'apprentissage (700) pour un réseau de neurones (1), le procédé d'apprentissage s'appuyant sur une technique sensible à la quantification, la technique sensible à la quantification mettant en oeuvre au moins une fonction de quantification ( $F_p^{(k)}$, $F_a^{(k)}$ ), la fonction de quantification permettant de quantifier au moins une variable d'une couche de neurones, la fonction de quantification **se caractérisant par** une précision de quantification ( $p_p^{(k)}$, $p_a^{(k)}$ ), la précision de quantification étant définie comme le nombre de paliers de la fonction de quantification, le procédé d'apprentissage étant **caractérisé en ce que** la précision de quantification de la fonction de quantification est modifiée (770) progressivement au cours des époques du procédé d'apprentissage, pour passer d'une précision de quantification initiale à une précision de quantification cible, les précisions de quantification initiale et cible étant prédéfinies, la précision de quantification initiale étant strictement supérieure à la précision de quantification cible.

2. Procédé selon la revendication 1, dans lequel la variable de la couche de neurones est un paramètre de la couche de neurones ou une valeur d'activation de la couche de neurones.

3. Procédé selon la revendication 1 ou la revendication 2, dans lequel la précision de quantification est modifiée pour passer de la précision de quantification initiale à la précision de quantification cible en passant par au moins une précision de quantification intermédiaire, la précision de quantification initiale étant strictement supérieure à la précision de quantification intermédiaire, qui elle-même est strictement supérieure à la précision de quantification cible.

4. Procédé selon l'une quelconque des revendications précédentes, dans lequel la modification de la précision de quantification est telle qu'une variation du nombre de paliers introduite entre une époque précédente et une époque courante est inférieure ou égale à une variation maximale du nombre de paliers entre deux époques successives, la variation maximale du nombre de paliers étant inférieure à la précision de quantification de l'époque précédente divisée par deux.

5. Procédé selon l'une des revendications 1 à 4, dans lequel la modification de la précision de quantification au cours des époques du procédé d'apprentissage suit une fonction de modification de la précision de quantification de la forme :

$$p^{(k)} = arr\left(C^k . p^{(1)}\right)$$

où $p^{(k)}$ est la précision de quantification à l'époque de rang k, $p^{(1)}$ est la précision de quantification initiale utilisée à l'époque de rang 1, *C* est un facteur de décroissance inférieur strictement à l'unité, et *arr*(. ) est la fonction arrondi.

6. Procédé selon l'une quelconque des revendications 1 à 4, dans lequel la modification de la précision de quantification au cours des époques du procédé d'apprentissage suit une fonction de modification de la précision de quantification de la forme :

$$p^{(k)} = arr((1 - k/N).p^{(1)} + k/N.p^c)$$

où $p^{(k)}$ est la précision de quantification à l'époque de rang k, $p(1)$ est la précision de quantification initiale utilisée à l'époque de rang 1, $p^c$ est la précision cible, N est le nombre total d'époque, et *arr*(. ) est la fonction arrondi.

7. Procédé selon l'une quelconque des revendications 1 à 4, dans lequel la modification de la précision de quantification au cours des époques du procédé d'apprentissage suit une fonction de modification de la précision de quantification de la forme :

$$p^{(k)} = \text{arr}(\cos(k.\pi/2N).2^{b+2} + (1 - \cos\left(k.\frac{\pi}{2N}\right)).2^b)$$

où $p^{(k)}$ est la précision de quantification à l'époque de rang k, $p(1)$ est la précision de quantification initiale utilisée à l'époque de rang 1, $p^c$ est la précision cible, N est le nombre total d'époque, et *arr*(.) est la fonction arrondi.

8. Procédé selon l'une des revendications précédentes, dans lequel, la précision de quantification cible étant choisie égale à $2^b$, *b* étant un nombre de bits, la précision de quantification initiale est choisie égale à $2^{b+\Delta}$, avec $\Delta$ entier supérieur ou égal à 1.

9. Procédé selon l'une des revendications précédentes, comportant les étapes de :

   - choix (710) de l'architecture du réseau de neurones et d'une technique sensible à la quantification particulière ; et,
   - choix (720) d'une précision de quantification cible, d'une précision de quantification initiale, et d'une fonction de modification de la précision de quantification permettant de modifier la précision de quantification d'une époque à l'autre du procédé d'apprentissage,

   puis, pour l'époque de rang k, k étant un nombre entier supérieur à l'unité :

   - réalisation d'une phase d'inférence et d'une phase de rétropropagation à une précision de quantification courante ($p^{(k)}$) ;
   - vérification (750) d'un critère de fin du procédé d'apprentissage ; et, si la vérification est négative,
   - comparaison (760) de la précision de quantification courante avec la précision cible ; et, si la précision de quantification courante est supérieure à la précision de quantification cible,
   - modification de la précision de quantification courante pour une époque suivante de rang k+1 en utilisant la fonction de modification de la précision de quantification.

10. Procédé selon l'une quelconque des revendications précédentes, dans lequel la technique sensible à la quantification est une technique scalaire ou une technique vectorielle.

11. Procédé selon la revendication 10, dans lequel la technique sensible à la quantification - QAT est choisie parmi :

   - la technique d'entrainement à échelle ajustée - SAT ;
   - la technique de quantification à taille de marche apprise - LSQ ; et,
   - la technique de quantification non-uniforme à uniforme - N2UQ.

12. Procédé selon l'une quelconque des revendications précédentes, dans lequel, dans une première partie, la précision de quantification du ou des variables des couches de neurones les plus basses du réseau de neurones est progressivement modifiée en conservant une précision de quantification plus élevée pour la ou les variables des couches de neurones les plus hautes du réseau de neurones, puis, dans une seconde partie, la précision de quantification du ou des variables des couches de neurones les plus hautes est à son tour progressivement modifiée.

13. Procédé selon l'une quelconque des revendications précédentes, dans lequel le réseau de neurones est du type ResNet.

14. Procédé selon l'une quelconque des revendications précédentes, dans lequel, lorsque les paliers de la fonction de quantification ne suivent pas une répartition uniforme, une position de chacun des paliers constitue un paramètre du réseau de neurones.

15. Procédé mis en oeuvre par ordinateur de configuration d'un circuit de calcul cible avec un réseau de neurones entrainé, comportant les étapes de :

   - fournir un circuit de calcul cible, dont les opérandes sont codées avec une précision de codage prédéfinie ;
   - mettre en oeuvre un procédé d'apprentissage (700) conforme à l'une quelconque des revendications 1 à 14 en choisissant une précision cible égale à la précision de codage, pour obtenir un réseau de neurones (1) entrainé dont les paramètres sont codés à la précision de codage ; et,

- transférer le réseau de neurones (1) entrainé sur le circuit de calcul cible.

16. Programme d'ordinateur comportant des instructions logicielles qui, lorsqu'elles sont exécutées par un ordinateur, mettent en oeuvre un procédé selon l'une quelconque des revendications 1 à 14 afin d'obtenir un réseau de neurones entrainé dont au moins une variable est quantifiée à une précision de quantification cible.

17. Système de contrôle (800) adapté pour mettre en oeuvre un procédé selon l'une quelconque des revendications 1 à 14 afin d'obtenir un réseau de neurones entrainé dont au moins une variable est quantifiée à une précision de quantification cible.

18. Système de contrôle (800) comprenant :

- un circuit de calcul (802) implémentant un réseau de neurones et comprenant des moyens de mémorisation (803), le réseau de neurones calculant une valeur de prédiction à partir d'une valeur d'instance ;
- au moins un capteur (801) configuré pour capturer en entrée des données physiques et délivrer en sortie des valeurs d'instance audit réseau de neurones ;
- au moins un dispositif (804) recevant les valeurs de prédiction calculées par le réseau de neurones,

**caractérisé en ce que** le réseau de neurones est un réseau de neurones entrainé résultant de la mise en oeuvre d'un procédé d'apprentissage selon l'une quelconque des revendications 1 à 14, les paramètres du réseau de neurones appris à la suite de la mise en oeuvre du procédé d'apprentissage étant mémorisés dans lesdits moyens de mémorisation (803).

$$\underline{\text{FIG.1}}$$

EP 4 394 658 A1

FIG.2

$$FIG.3$$

EP 4 394 658 A1

$$\underline{\text{FIG.4}}$$

**FIG.5**

700

710 — Choix RN et technique de quantification QAT

720 — Choix : précision cible $(2^b)$ ; précision initiale $(2^{b+2})$ ; et fonction d'évolution de la précision (C)

730 — k == 1

740 — Epoque k à la précision $p^{(k)}$

750 — Critère de fin d'apprentissage ?
oui → RN entraîné quantifié à la précision cible
non ↓

760 — $p^{(k)} = 2^b$ ?
oui → RN entraîné quantifié à la précision cible
non ↓

770 — Mise à jour de la précision pour l'époque suivante : $p^{(k+1)} = \mathrm{arr}(C^k \times 2^{b+2})$

780 — k == k+1

$F_p^{(0)}$

$q_p^{(k)}$

l

745

$F_p^{(k)}$

705

$W_{i,j}^{(k)}$

a

$Q_{i,j}^{(k)}$

710

Phase d'inférence

740 +    730 +

$dL/dW_{ij}^{(k)}$

$dL/dq_p^{(k)}$

STE

725

$dL/dQ_{ij}^{(k)}$

700

Phase de rétropropagation

720

FIG.6

800

802

CPU / GPU

803

1

RN

Instance → → Prédiction

801

804

# FIG.7

**RAPPORT DE RECHERCHE EUROPEENNE**

Europäisches Patentamt
European Patent Office
Office européen des brevets

Numéro de la demande

EP 23 22 0246

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ZHUANG BOHAN ET AL: "Towards Effective Low-Bitwidth Convolutional Neural Networks", 2018 IEEE/CVF CONFERENCE ON COMPUTER VISION AND PATTERN RECOGNITION, IEEE, 18 juin 2018 (2018-06-18), pages 7920-7928, XP033473713, DOI: 10.1109/CVPR.2018.00826 * le document en entier * | 1-18 | INV. G06N3/0464 G06N3/048 G06N3/0495 G06N3/084 G06N3/09 G06N3/0985 G06N3/126 |
| A | Allenet Thibault ET AL: "Disentangled Loss for Low-Bit Quantization-Aware Training", , 19 juin 2022 (2022-06-19), pages 1-5, XP055945289, Extrait de l'Internet: URL:https://openaccess.thecvf.com/content/CVPR2022W/ECV/papers/Allenet_Disentangled_Loss_for_Low-Bit_Quantization-Aware_Training_CVPRW_2022_paper.pdf [extrait le 2022-07-22] * section 2.1 * | 10,11 | |
| A | LIU ZECHUN ET AL: "Nonuniform-to-Uniform Quantization: Towards Accurate Quantization via Generalized Straight-Through Estimation", 2022 IEEE/CVF CONFERENCE ON COMPUTER VISION AND PATTERN RECOGNITION (CVPR), IEEE, 18 juin 2022 (2022-06-18), pages 4932-4942, XP034194595, DOI: 10.1109/CVPR52688.2022.00489 * abstract * | 10,11 | |

-/--

**DOMAINES TECHNIQUES RECHERCHES (IPC)**

G06N

Le présent rapport a été établi pour toutes les revendications

| Lieu de la recherche | Date d'achèvement de la recherche | Examinateur |
|---|---|---|
| La Haye | 5 janvier 2024 | Nourestani, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

2

**RAPPORT DE RECHERCHE EUROPEENNE**

Europäisches Patentamt
European Patent Office
Office européen des brevets

Numéro de la demande

**EP 23 22 0246**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | AMIR GHOLAMI ET AL: "A Survey of Quantization Methods for Efficient Neural Network Inference", ARXIV.ORG, CORNELL UNIVERSITY LIBRARY, 201 OLIN LIBRARY CORNELL UNIVERSITY ITHACA, NY 14853, 21 juin 2021 (2021-06-21), XP081980396, * page 7 - page 9 * ----- | 12,14 | |
| A | STEVE DAI ET AL: "VS-Quant: Per-vector Scaled Quantization for Accurate Low-Precision Neural Network Inference", ARXIV.ORG, CORNELL UNIVERSITY LIBRARY, 201 OLIN LIBRARY CORNELL UNIVERSITY ITHACA, NY 14853, 8 février 2021 (2021-02-08), XP081877190, * introduction * ----- | 15 | |
| A,D | PIERRE STOCK ET AL: "And the Bit Goes Down: Revisiting the Quantization of Neural Networks", ARXIV.ORG, CORNELL UNIVERSITY LIBRARY, 201 OLIN LIBRARY CORNELL UNIVERSITY ITHACA, NY 14853, 12 juillet 2019 (2019-07-12), XP081441315, * le document en entier * ----- | 10,11 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 5 janvier 2024 | Nourestani, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## RÉFÉRENCES CITÉES DANS LA DESCRIPTION

**Littérature non-brevet citée dans la description**

- **QING JIN et al.** Towards Efficient Training for Neural Network Quantization. *arXiv:1912.10207*
- **STEVEN K. ESSER et al.** Learned Step Size Quantization. *arXiv:1902.08153*
- **ZECHUN LIU et al.** Nonuniform-to-Uniform Quantization: Towards Accurate Quantization via Generalized Straight-Through Estimation. *arXiv:2111.14826*
- **KAIMING HE et al.** Deep Residual Learning for Image Recognition. *arXiv:1512.03385*
- **PIERRE STOCK et al.** *And the Bit Goes Down: Revisiting the Quantization of Neural Networks, https://doi.org/10.48550/arXiv. 1907.05686*
- **HAI VICTOR HABI et al.** HMQ: Hardware Friendly Mixed Précision Quantization Block for CNNs. *arXiv:2007.09952*